Europäisches Patentamt

European Patent Office

Office européen des brevets

(19)

(11) Veröffentlichungsnummer: **0 447 639 B1**

(12) **EUROPÄISCHE PATENTSCHRIFT**

(45) Veröffentlichungstag der Patentschrift: **04.05.94**

(51) Int. Cl.⁵: **G02B 6/30**, G02B 6/12

(21) Anmeldenummer: **90124042.4**

(22) Anmeldetag: **13.12.90**

(54) **Anordnung zur Auffächerung von Lichtpfaden.**

(30) Priorität: **23.03.90 DE 4009323**

(43) Veröffentlichungstag der Anmeldung:
**25.09.91 Patentblatt 91/39**

(45) Bekanntmachung des Hinweises auf die
Patenterteilung:
**04.05.94 Patentblatt 94/18**

(84) Benannte Vertragsstaaten:
**FR GB IT NL SE**

(56) Entgegenhaltungen:
DD-A- 279 751
US-A- 4 094 579
US-A- 4 523 803

PATENT ABSTRACTS OF JAPAN Band 12, Nr.
173 (P-706), 24 Mai 1988; & JP A 62283301

JOURNAL OF LIGHTWAVE TECHNOLOGY
Band LT-3, Nr. 5,Oktober 1985, Seiten
1159-1162, New York, US; J. LIPSON et al.: "A
six-channel wavelength multiplexer and demultiplexer for single mode systems"

OPTICS LETTERS Band 13, Nr. 5, Mai 1988,
Seiten 425-427, New York, NY, US; B.E. KIN-
CAID: "Coupling of polarization-maintaining
optical fibers to Ti:LiNbO3 waveguides with
angled interfaces"

(73) Patentinhaber: **ANT Nachrichtentechnik GmbH**
**Gerberstrasse 33**
**D-71522 Backnang(DE)**

(72) Erfinder: **Kuke, Albrecht, Dr. rer. nat.**
**Nelkenweg 2**
**W-7159 Auenwald(DE)**

EP 0 447 639 B1

**Beschreibung**

Die Erfindung betrifft eine Anordnung zur Auffächerung paralleler Lichtbündel in parallele Lichtbündel mit verändertem Abstand gemäß dem Oberbegriff des Patentanspruches 1.

Beim Entwerfen optischer Module mit mehr als einem Lichtbündel tritt häufig das Problem auf, die Lichtbündel von einer ersten Funktionseinheit mit engen Lichtbündelabständen zu einer zweiten Funktionseinheit mit weiten Lichtbündelabständen zu führen, wobei die Abstände der Lichtbündel aufgefächert werden müssen. In den meisten Fällen müssen konstruktionsbedingt weitere Randbedingungen erfüllt sein: Die Lichtbündel müssen an den Koppelstellen parallel zueinander verlaufen und die Koppelstellen müssen in einer geraden Reihe liegen.

Aus der US 4 878 724 ist es bekannt, zur Auffächerung von Lichtbündeln zwei- oder mehrfach abgewinkelte gerade Lichtwellenleiter zu verwenden. Diese können sich auch schneiden. Eine solche Anordnung führt zu Abstrahlungsverlusten, die sich bei vielen Anwendungen negativ auswirken.

Aus der EP 131 722 B1 ist es bekannt, zur Auffächerung der Lichtbündel gekrümmte Wellenleiter zu verwenden. Die Randbedingung, daß die Ein- und Austrittspfade parallel zueinander verlaufen müssen, wird nach dem Stand der Technik dadurch gelöst, daß S-förmig gekrümmte Lichtwellenleiter verwendet werden. Wegen der Abstrahlverluste in gekrümmten Lichtwellenleitern darf der Krümmungsradius nicht zu klein sein. Will man einen vorgegebenen Parallelversatz der Lichtwellenleiter erreichen, so muß eine große Baulänge der Auffächerungseinheit gewählt werden. Beispielsweise bei einer Struktur, bei welcher der Lichtbündelabstand von 0 auf 125 Mikrometer zur Ankopplung zweier Fasern erweitert werden soll, beträgt die Länge der Auffächerungszone zwischen der Ein- und Austrittsseite jeweils ungefähr 10 mm und ist damit länger als die eigentliche Koppelzone. Sollen mehr als zwei Lichtbündel aufgefächert werden, so wächst der erforderliche Parallelversatz mit jedem Lichtpfad weiter an, was zu größerer Baulänge oder, bei stärkerer Krümmung der Wellenleiter, zu höheren Abstrahlverlusten führt.

Aus Jan Lipson et al, "A Six-Channel Wavelength Multiplexer and Demultiplexer For Single Mode Systems" in Journal of Lightwave Technology, LT-3 (1985), No. 5, S. 1159 - 1162 ist ein Wellenleiter-Konzentrator bekannt, dessen Funktion es ist, den Abstand von parallelen Lichtbündeln zu verringern. Die Wellenleiter des Konzentrators weisen ebenfalls S-förmige Krümmungen auf, wodurch, wie oben bereits beschrieben, Verluste auftreten.

Ausgehend von diesem Stand der Technik ist es Aufgabe der Erfindung, eine Anordnung zur Auffächerung paralleler Lichtbündel in parallele Lichtbündel mit verändertem Abstand anzugeben, die nur eine kleine Baulänge und geringe Abstrahlverluste aufweist.

Die Aufgabe wird von einer Anordnung gemäß Anspruch 1 gelöst.

Vorteilhafte Weiterbildungen sind in den Unteransprüchen angegeben.

Die erfindungsgemäße Anordnung verwendet zwischen der ersten Funktionseinheit mit engen Lichtbündelabständen und der zweiten Funktionseinheit mit weiten Lichtbündelabständen gerade Lichtwellenleiter, die nahezu keine Abstrahlverluste aufweisen. Die erforderliche Lichtumlenkung erfolgt nicht durch Krümmung der Lichtwellenleiter, sondern erfindungsgemäß durch Lichtbrechung an den Ein- und Austrittsflächen der Lichtwellenleiter der Anordnung. Die Lichtwellenleiter der Anordnung weisen dazu Ein- und Austrittsflächen auf, die zu einer auf der Lichtwellenleiterachse senkrechten Ebene geneigt verlaufen. Dies hat den Vorteil, daß Reflexionen nicht in die Lichteinfallsrichtung reflektiert werden und sich somit auch nicht störend auswirken können. Bei Verwendung von hochstabilen Lasern für die kohärente Übertragungstechnik ist dies besonders wichtig. Es genügt, wenn die Ein- und Austrittsflächen der Lichtwellenleiter jeweils im Kernbereich abgeschrägt sind. Dadurch kann der Abstand zwischen dem Lichtwellenleiter der Anordnung und den Funktionseinheiten in die ein- bzw. ausgekoppelt werden soll verringert werden.

Um einen Parallelversatz zwischen den Funktionseinheiten und somit zwischen den eingangs- und ausgangsseitigen Lichtbündeln zu erreichen, muß die Anordnung zur Auffächerung eine zweimalige Lichtumlenkung vorsehen. Die Lichtbündel vor und hinter der Anordnung zur Auffächerung sind zueinander parallel, der Lichtwellenleiter zwischen den Lichtumlenkungen ist gegen die Lichtbündel vor und hinter der Anordnung um den Winkel $\delta_i$ geneigt. Der Winkel $\delta_i$ ist für die verschiedenen Lichtbündel unterschiedlich. Es hängt davon ab, ob ein Lichtbündel bei einem Array zu den äußeren oder mittleren Lichtbündeln gehört. Ein Array ist meistens symmetrisch aufgebaut. Der Winkel $\delta_i$ ergibt sich für ein Lichtbündel jeweils aus dem Parallelversatz $d_i$ und der Baulänge l für die Anordnung zur Auffächerung.

$$\delta_i = \arctan (d_i/l)$$

Die Normalen auf den jeweiligen Stirnflächen der Lichtwellenleiter der Anordnung sind um einen Winkel $\alpha_i$ gegen die Lichtbündel vor und hinter der Anordnung geneigt. Dadurch wird erreicht, daß das in die Lichtwellenleiter der Anordnung eingekoppelte Lichtbündel nach Berechnung an der Stirnfläche auf der Lichtwellenleiterachse verläuft und daß das aus dem Lichtwellenleiter der Anordnung ausgekoppelte Lichtbündel nach Brechung wieder parallel zu den anderen Lichtbündeln verläuft. Die Normalen der Stirnflächen sind zur Achse des jeweiligen Lichtwellenleiters der Anordnung um den Winkel $\beta_i$ geneigt. Es gilt:

$$\alpha_i = \beta_i + \delta_i$$

Für die Brechung gilt:

$$\sin \delta_i = n \cdot \sin \beta_i$$

Wobei n der Brechungsindex des Lichtwellenleiters ist. Für den Winkel $\alpha_i$ ergibt sich:

$$\alpha_i = \arcsin (n \cdot \sin \delta_i/(1 - n \cdot \cos \delta_i)^2 + n^2 \cdot \sin^2 \delta_i)^{1/2})$$

Da der Parallelversatz $d_i$ für jedes Lichtbündel unterschiedlich ist, ist auch die Neigung der Stirnflächen für jeden Lichtwellenleiter anders.

Die Verwendung von einzelnen abgeschrägten Stirnflächen, wie sie für die erfindungsgemäße Anordnung notwendig ist, ist im Lichtwellenleiterarray normalerweise nicht üblich. Es bedeutet jedoch keinen Mehraufwand bei der Herstellung, wenn man beispielsweise Rippenwellenleiter verwendet, die auf fotolithografischem Wege strukturiert werden. Es müssen nur zusätzlich zu den Seitenkanten der Lichtwellenleiter auch noch die Stirnfläche erzeugt werden. Dies kann z.B. durch reaktives Ionenätzen geschehen.

Besonders vorteilhaft ist eine Ausführung der erfindungsgemäßen Anordnung in Siliziumtechnik. Hier lassen sich durch anisotropes Ätzen Halterungsnuten für anzukoppelnde Faserarrays oder Mikrolinsenarrays herstellen. Auf dem gleichen Siliziumträger können beispielsweise durch Anwendung der Flammenhydrolyse aus $SiCl_4$-$TiCl_4$-Gemischen Wellenleiter aus $SiO_2$ mit $TiO_2$-Dotierung zur Anhebung des Brechungsindexes im Kernbereich hergestellt werden. Die Strukturierung der Seiten- und Stirnflächen der Rippenwellenleiter kann durch reaktives Ionenätzen über eine Fotoresistmaske erfolgen. Die erforderliche hohe Präzision für die Ankopplung wird dabei durch die Fotolithographie erreicht, so daß eine Justierung nicht mehr erforderlich ist.

Die Anordnung zur Auffächerung paralleler Lichtbündel in parallele Lichtbündel mit verändertem Abstand kann dann zwischen zwei Funktionseinheiten angebracht werden. Eine Funktionseinheit kann beispielsweise ein Richtkoppler, bei dem der Abstand zweiter Lichtbündel wenige Mikrometer beträgt, eine Boastruktur, bei der die Lichtbündel direkt nebeneinander angeordnet sind, oder eine Laser- oder Empfangsdiodenzeile mit einem Abstand der Lichtbündel von einigen zehn Mikrometern, sein. Auch ein Faserarray, bei dem die Lichtbündelabstände zumindest 125 Mikrometer betragen, oder eine Zeile mit mikrooptischen Abbildungskomponenten wie Kugellinsen, Selfoc-Linsen oder Hologrammen, können eine Funktionseinheit darstellen. Bei einer Zeile mit mikrooptischen Abbildungskomponenten sind deren gegenseitige Abstände mindestens so groß, wie die Durchmesser der Einzelkomponenten sein müssen. Diese liegen etwa bei 1 mm.

Natürlich kann die Anordnung zur Auffächerung paralleler Lichtbündel in parallele Lichtbündel mit verändertem Abstand in beiden Richtungen betrieben werden, d.h. das Licht kann sowohl auf der Seite eingekoppelt werden auf der die Lichtbündel weiter auseinander liegen als auch auf der Seite eingekoppelt werden auf der die Lichtbündel nahe nebeneinander liegen.

Anhand der Figuren werden Ausführungsbeispiele der Erfindung erläutert. Es zeigen:

Figur 1 eine Anordnung zur Auffächerung von Lichtbündeln in der Draufsicht,
Figur 2 obige Anordnung im Detail und
Figur 3 eine Detailzeichnung einer Anordnung mit Streifenwellenleitern und Siliziumträger.

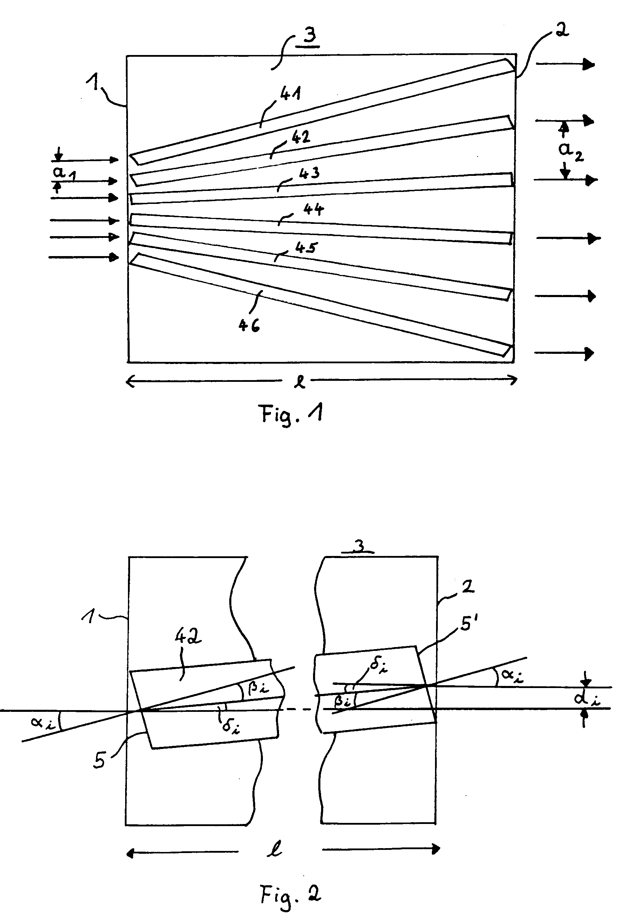

Die in Figur 1 dargestellte Anordnung zur Auffächerung von Lichtbündeln ist wie folgt aufgebaut: Auf einer Grundplatte 3 befinden sich sechs geradlinig verlaufende Streifenwellenleiter 41 bis 46. Eingangsseitig treten sechs Lichtbündel mit dem gegenseitigen Abstand $a_1$ in die Anordnung ein. Die eingangsseitige Seite der Grundplatte 3 wird als Eingangsstirnfläche 1 bezeichnet. Auf der Austrittsstirnfläche 2 treten die sechs Lichtbündel mit dem Abstand $a_2$ wieder aus der Anordnung zur Auffächerung aus. Die optischen Achsen der ein- und austretenden Lichtbündel verlaufen parallel zueinander und senkrecht zu der Eingangs- bzw. Austrittsstirnfläche 1, 2 der Grundplatte 3. Die Streifenwellenleiter 41-46 sind um die jeweiligen Winkel $\delta_i$ zur Normalen auf der Eingangs- und Ausgangsstirnfläche 1, 2 geneigt. Die Winkelverhältnisse sind aus der Detailzeichnung in Figur 2, die den Anfangs- und Endbereich des Streifenwellenleiters 42 darstellt, ersichtlich. Der Winkel $\delta_i$ ergibt sich aus dem Auffächerungsversatz $d_i$ und der Länge 1 der Grundplatte wie folgt:

$$\delta_i = \arctan (d_i/l)$$

Der Streifenwellenleiter 42 weist zwei Stirnflächen 5 und 5' auf, die zur Achse des Streifenwellenleiters um den Winkel $\beta_i$ und zur Normalen auf der Eingangs-bzw. Ausgangsseite 1, 2 um den Winkel

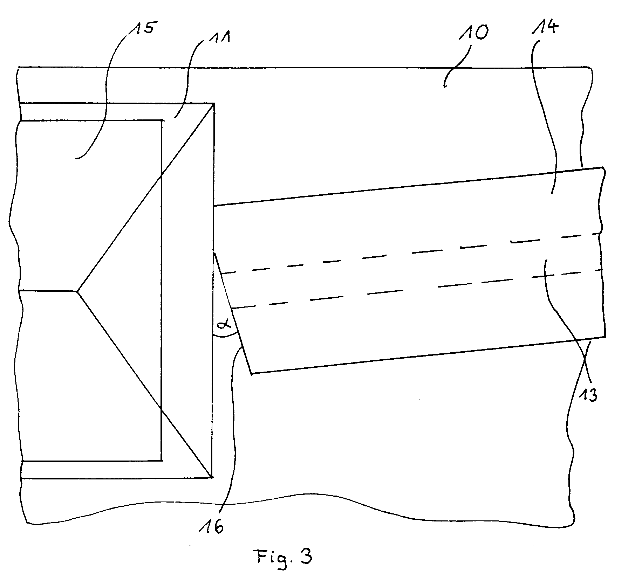

$\alpha_i$ geneigt ist. Der Neigungswinkel $\alpha_i$ ergibt sich aus dem Brechungsindex, damit das eingangsseitige Lichtbündel nach der Brechung an der Stirnfläche 5 genau in Richtung der Achse des Streifenwellenleiters verläuft. Die eingangsseitigen und ausgangsseitigen Winkelverhältnisse stimmen, da es sich um einen Parallelversatz handelt, miteinander überein. Figur 3 zeigt eine Draufsicht eines Siliziumträgers 10 mit anisotrop geätzter V-Nut 11 zur Aufnahme einer Lichtleitfaser 15 oder einer Rundoptik. Im Bereich der Auffächerung trägt der Siliziumträger eine Pufferschicht, auf der eine Kernschicht 13 aufgebracht und strukturiert wurde. Diese ist umgeben von einer Mantelschicht 14. Die Kernschicht hat einen höheren Brechungsindex als die Pufferschicht und die Mantelschicht. Durch reaktives Ionenätzen wird der aus Kernschicht 13 und Mantelschicht 14 bestehende Wellenleiter an seiner Stirnfläche 16 strukturiert. Die Abschrägung mit dem Winkel $\alpha$ ist hierbei nicht über die gesamte Wellenleiterbreite durchgeführt worden, sondern nur im Kernbereich und auf einer Seite des Kernes erfolgt. Dadurch kann der Abstand zwischen Wellenleiter und Lichtleitfaser 15 verringert werden.

**Patentansprüche**

1. Anordnung zur Auffächerung paralleler Lichtbündel in parallele Lichtbündel mit verändertem Abstand, die eine Grundplatte (3) mit einer Eingangs- und einer Austrittsstirnfläche (1, 2) aufweist, auf der mindestens zwei Lichtwellenleiter (41-46) aufgebracht sind, in die jeweils eines der parallelen Lichtbündel an einer Stirnfläche (5) eingekoppelt und an der anderen Stirnfläche (5') wieder ausgekoppelt wird, wobei die Lichtbündel senkrecht zu den Eingangs- und Austrittsstirnflächen (1, 2) orientiert sind, dadurch gekennzeichnet, daß alle Lichtwellenleiter (41-46) zwischen Eingangs- und Austrittsstirnfläche (1, 2) fächerartig als Geraden verlaufen, die sich nicht schneiden, daß die Stirnflächen (5, 5') der Lichtwellenleiter (41-46) zumindest in einem Teilbereich und zumindest im Kernbereich des Lichtwellenleiters (41-46) gegen die Achse des jeweiligen Lichtwellenleiters (41-46) geneigt sind und daß der Neigungswinkel $\alpha_i$, zwischen der Normalen auf der Stirnfläche (5, 5') und der Normalen auf der Eingangs- und Austrittsstirnfläche (1, 2), sich wie folgt ergibt:

$$\alpha_i = \arcsin (n \cdot \sin \delta_i/(1 - n \cdot \cos \delta_i)^2 + n^2 \cdot \sin^2 \delta_i)1/2)$$

wobei n der Brechungsindex des Lichtwellenleiters und $\delta_i$ der Winkel zwischen der Normalen auf der Eingangs- und Austrittsstirnfläche (1, 2) und der Achse des jeweiligen Lichtwellenleiters (41-46) ist.

2. Anordnung zur Auffächerung paralleler Lichtbündel in parallele Lichtbündel mit verändertem Abstand, nach Anspruch 1, dadurch gekennzeichnet, daß die Lichtwellenleiter (41-46) Streifenleiter sind.

3. Anordnung zur Auffächerung paralleler Lichtbündel in parallele Lichtbündel mit verändertem Abstand, nach Anspruch 1, dadurch gekennzeichnet, daß die Lichtwellenleiter (41-46) Lichtleitfasern sind, die auf der Grundplatte (3) aufgebracht werden.

4. Anordnung zur Auffächerung paralleler Lichtbündel in parallele Lichtbündel mit verändertem Abstand nach einem der Ansprüche 1 bis 3, dadurch gekennzeichnet, daß die Grundplatte (3) ein Siliziumträger (10) ist.

5. Anordnung zur Auffächerung paralleler Lichtbündel in parallele Lichtbündel mit verändertem Abstand nach Anspruch 4, dadurch gekennzeichnet, daß in dem Siliziumträger (10) anisotrop geätzte V-Nuten (11) vorgesehen sind, die zur Aufnahme von Lichtleitfasern dienen.

6. Anordnung zur Auffächerung paralleler Lichtbündel in parallele Lichtbündel mit verändertem Abstand nach einem der bisherigen Ansprüche, dadurch gekennzeichnet, daß die Grundplatte (3) derart ausgestaltet ist, daß eingangsseitig und ausgangsseitig Funktionseinheiten mit parallelen Lichtbündeln anbringbar sind.

7. Anordnung zur Auffächerung paralleler Lichtbündel in parallele Lichtbündel mit verändertem Abstand nach Anspruch 6, dadurch gekennzeichnet, daß sich die Funktionseinheiten an der Grundplatte (3) an die Eingangs- und Austrittsstirnfläche (1, 2) direkt anschließen.

**Claims**

1. Arrangement for the fanning out of parallel light beams into parallel light beams with changed spacing, which comprises a base plate (3) with an entry and an exit end face (1, 2) and onto which at least two light wave conductors (41 to 46) are applied, in each of which one of the parallel light beams is coupled in at one end face (5) and coupled out again at the other end face (5'), wherein the light beams are oriented perpendicularly to the entry and exit end faces (1, 2), characterised thereby that all light wave conductors (41 to 46) extend fan-shaped between entry and exit end faces (1, 2) as straight lines which do not intersect, that the end faces (5, 5') of the light wave conductors (41 to 46) are inclined relative to the axis of the respective light wave conductor (41 to 46) at least in a partial region and at least in the core region of the light wave conductor (41 to 46) and that the angle of inclination $\alpha_i$ between the normals to the end faces (5, 5') and the normals to entry and exit faces (1, 2) results as follows:

$$\alpha_i = \text{arc sine } (n \cdot \text{sine } \delta_i/((1 - n \cdot \cos \delta_i)^2 + n^2 \cdot \text{sine}^2 \delta_i)1/2)$$

wherein n is the refractive index of the light wave conductor and $\delta_i$ is the angle between the normals to the entry and exit end faces (1, 2) and the axis of the respective light wave conductor (41 to 46).

2. Arrangement for the fanning out of parallel light beams into parallel light beams with changed spacing according to claim 1, characterised thereby that the light wave conductors (41 to 46) are strip conductors.

3. Arrangement for the fanning out of parallel light beams into parallel light beams with changed spacing according to claim 1, characterised thereby that the light wave conductors (41 to 46) are optical fibres which are applied to the base plate.

4. Arrangement for the fanning out of parallel light beams into parallel light beams with changed spacing according to one of claims 1 to 3, characterised thereby that the base plate (3) is a silicon carrier.

5. Arrangement for the fanning out of parallel light beams into parallel light beams with changed spacing according to claim 4, characterised thereby that provided in the silicon carrier are anisotropic etched V grooves (11) which serve for the reception of optical fibres.

6. Arrangement for the fanning out of parallel light beams into parallel light beams with changed spacing according to one of the foregoing claims, characterised thereby that the base plate (3) is so configured that functional units with parallel light beams are mountable at the entry end and exit end.

7. Arrangement for the fanning out of parallel light beams into parallel light beams with changed spacing according to claim 6, characterised thereby that the functional units of the base plate (3) directly adjoin the entry and exit end faces (1, 2).

**Revendications**

1. Dispositif pour élargir en éventail les faisceaux lumineux parallèles en faisceaux lumineux parallèles à écartement modifié, présentant une plaque de base (3) avec une surface frontale d'entrée et une surface frontale de sortie (1, 2) sur la plaque de base (3) sont rapportés au moins deux guides d'ondes lumineuses (41-46) dans chacun desquels l'un des faisceaux lumineux parallèles est couplé à une surface frontale (5) et à nouveau découplé à l'autre surface frontale (5'), les faisceaux lumineux étant orientés perpendiculairement aux surfaces frontales d'entrée et de sortie (1, 2), dispositif caractérisé par le fait qu'entre les surfaces frontales d'entrée et de sortie (1, 2) tous les guides d'ondes lumineuses (41-46) sont, à la façon d'un éventail, en ligne droite qui ne s'intersectent pas, par le fait que les surfaces frontales (5, 5') des guides d'ondes lumineuses (41-46) sont, au moins dans une zone partielle et au moins dans la zone du noyau du guide d'ondes lumineuses (41-46), inclinées sur l'axe du guide d'ondes lumineuses (41-46) respectif et par le fait que l'angle d'inclinaison $\alpha_i$ entre la normale à la surface frontale (5, 5') et les normales aux surfaces frontales d'entrée et de sortie (1, 2) s'obtient comme suit:

$$\alpha_i = \text{arcsin } (n \cdot \sin \delta_i/((1 - n \cdot \cos \delta_i)^2 + n^2 \cdot \sin^2 \delta_i)^{1/2})$$

où n est l'indice de réfraction du guide d'ondes lumineuses et $\delta_i$ l'angle entre les normales aux surfaces frontales d'entrée et de sortie (1, 2) et l'axe du guide d'ondes lumineuses respectif (41-46).

2. Dispositif pour élargir en éventail les faisceaux lumineux parallèles en faisceaux lumineux parallèles à écartement modifié, selon la revendication 1, caractérisé par le fait que les guides d'ondes lumineuses (41-46) sont des guides en stries.

3. Dispositif pour élargir en éventail des faisceaux lumineux parallèles en faisceaux lumineux parallèles à écartement modifié, selon la revendication 1, caractérisé par le fait que les guides d'ondes lumineuses (41-46) sont des fibres conductrices de la lumière qui sont rapportées sur la plaque de base (3).

4. Dispositif pour élargir en éventail des faisceaux lumineux parallèles en faisceaux lumineux parallèles à écartement modifié, selon l'une des revendications 1 à 3, caractérisé par le fait que la plaque de base (3) est un support silicium (10).

5. Dispositif pour élargir en éventail des faisceaux lumineux parallèles en faisceaux lumineux parallèles à écartement modifié selon la revendication 4, caractérisé par le fait que, dans le support silicium (10) sont prévues des encoches en V (11) qui sont obtenues par attaque anisotrope et servent a recevoir les fibres conductrices de la lumière.

6. Dispositif pour élargir en éventail des faisceaux lumineux parallèles en faisceaux lumineux parallèles à écartement modifié selon l'une des revendications précédentes, caractérisé par le fait que la plaque de base (3) est réalisée de façon qu'à des organes fonctionnels puissent, du côté de l'entrée et du côté de la sortie, être appliqués des faisceaux lumineux parallèles.

7. Dispositif pour élargir en éventail des faisceaux lumineux parallèles en fuseaux lumineux parallèles à écartement modifié selon la revendication 6, caractérisé par le fait que les organes fonctionnels se raccordent directement à la plaque de base (3) aux surfaces frontales d'entrée et de sortie (1, 2).

Fig. 1

Fig. 2

Fig. 3